# EUROPÄISCHE PATENTSCHRIFT

(11) **EP 0 798 193 B1**
(45) Veröffentlichungstag und Bekanntmachung des Hinweises auf die Patenterteilung: **10.11.1999**
(21) Anmeldenummer: 97102866.7
(22) Anmeldetag: 21.02.1997
(51) Int. Cl.: B62B 3/18

(54) **Stapelbarer Einkaufswagen**
Nestable shopping trolley
Chariot d'achat emboîtable

(30) Priorität: 20.03.1996 DE 29605151 U
(43) Veröffentlichungstag der Anmeldung: 01.10.1997
(73) Patentinhaber: WANZL METALLWARENFABRIK GMBH, D-89336 Leipheim (DE)
(72) Erfinder: Scheffler, Hans, 89233 Neu-Ulm/Burlafingen (DE)

(56) Entgegenhaltungen:
- EP-A- 0 141 398
- EP-A- 0 620 146

## Beschreibung

Die Erfindung betrifft einen stapelbaren Einkaufswagen, mit einem Fahrgestell, dessen nach oben gekrümmte Längsholme einen Korb tragen und mit einer zwischen den Längsholmen und unterhalb des Korbes befindlichen, zum Abstellen von größeren Gegenständen bestimmten Ablage, die aus einer Nichtgebrauchslage in eine Gebrauchslage und umgekehrt bewegbar ist.

Einkaufswagen dieser Art sind in verschiedenen Ausführungen bekannt. Ihre Ablagen können unterschiedlichst gestaltet sein. So sind Einkaufswagen mit klappbaren Ablagen (EP 0 141 398 A1) ebenso im Einsatz wie Einkaufswagen, deren Ablagen (EP 0 402 551 A1) schubladenartig ausgebildet sind. Auch kennt man Einkaufswagen, deren Ablagen (DE 94 08 921.3) aus einem klappbaren und aus einem schubladenartigen Teil bestehen. Schließlich zählen Einkaufswagen zum Stand der Technik, deren Ablagen (EP 0 620 146 A1) aus einen, ortsfesten Abschnitt und aus einem verschwenkbaren Teil bestellen. Alle diese Einkaufswagen sind so konstruiert, daß ihre Ablagen zum bevorzugten Tragen von großen Getränkekisten geeignet sind. Inzwischen finden für sog. 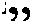 PET-Flaschen" bestimmte Getränkekisten Verwendung, die etwa um die Hälfte kleiner oder schmäler sind als die bisher bekannten großen Getränkekisten. Diese kleinen Getränkekisten lassen sich auf den bekannten Ablagen nicht so sicher abstellen, wie große Getränkekisten. Schwierigkeiten stellen sich besonders dann ein, wenn versucht wird, zwei derart kleine Getränkekisten auf einer Ablage abzustellen. Die Ursache liegt darin, daß zwischen der Abstellfläche der Ablagen und den nach oben gekrümmten Längsholmen der Fahrgestelle beidseitig ein freier Raum gebildet sein muß, der von den Längsholmen eines rückwärtig einzuschiebenden Einkaufswagen beim Stapelvorgang beansprucht wird. Diese Räume begünstigen ein seitliches Herabstürzen kleiner, auf den Ablagen befindlicher Getränkekisten.

Die Aufgabe der Erfindung besteht darin, einen Einkaufswagen der gattungsgemäßen Art so weiterzuentwickeln, daß auch kleinere Getränkekisten, die auf der Ablage abgestellt sind, vor einem seitlichen Herabstürzen bewahrt bleiben und daß dabei die Eignung solcher Einkaufswagen, nämlich engstmöglich gestapelt werden zu können, nicht beeinträchtigt wird.

Die Lösung der Aufgabe besteht darin, daß an beiden Seiten der Ablage bewegbar gelagerte Stützteile vorgesehen sind, die in ihrer Gebrauchslage zum weiteren Stützen der größeren Gegenstände bestimmt und so angeordnet sind, daß beim Stapelvorgang zweier Einkaufswagen die Stützteile der Ablage des vorausbefindlichen Einkaufswagen vom einzuschiebenden Einkaufswagen aus ihrer Gebrauchslage in eine den Stapelvorgang nicht behindernde Lage bewegbar sind.

Mit der vorgeschlagenen Lösung lassen sich jetzt kleinere Getränkekisten ebenfalls sicher auf den Ablagen befördern. Die Stützteile vergrößern nicht nur die Abstellfläche der Ablage, sondern sie dienen auch bevorzugt als seitliche Begrenzung für auf die Ablage abgestellte Gegenstände. Die bewegliche Lagerung der Stützteile wiederum ermöglicht in vorteilhafter Weise ein Ausweichen der Stützteile dann, wenn es gilt, mehrere Einkaufswagen platzsparend ineinanderzuschieben, also zu stapeln. Dann nämlich drücken die nach oben gekrümmten Längsholme eines rückwärtig einzuschiebenden Einkaufswagens die bewegbar gelagerten Stützteile der in Gebrauchslage befindlichen Ablage eines vorausbefindlichen Einkaufswagens nach oben und verschaffen sich so den Platz in jenen Räumen, die sie beim engstmöglichen Stapeln der Einkaufswagen benötigen. Dabei nehmen die bewegbar gelagerten Stützteile eine solche Lage ein, daß sie die Längsholme der Fahrgestelle nicht behindern.

Die Erfindung wird anhand von Ausführungsbeispielen näher erläutert. Es zeigt
- Fig. 1: einen Einkaufswagen mit zwei auf der Ablage abgestellten kleinen Getränkekisten;
- Fig. 2: den gleichen Einkaufswagen ohne Getränkekisten, wobei die Stützteile an einem beweglichen Teil der Ablage angeordnet sind;
- Fig. 3: ausschnittweise und in Draufsicht zwei derartige Einkaufswagen während des Stapelvorganges;
- Fig. 4: einen weiteren Einkaufswagen, bei dem die Stützteile an einem ortsfesten Teil der Ablage vorgesehen sind sowie
- Fig. 5: in einer Draufsicht die Ablage des Einkaufswagens gemäß Fig. 4.

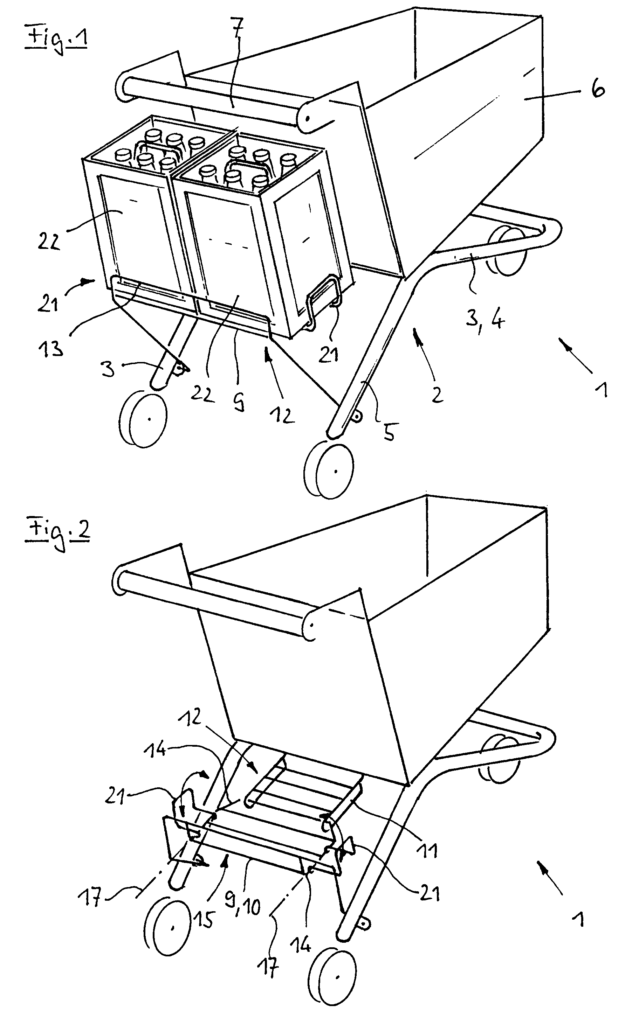

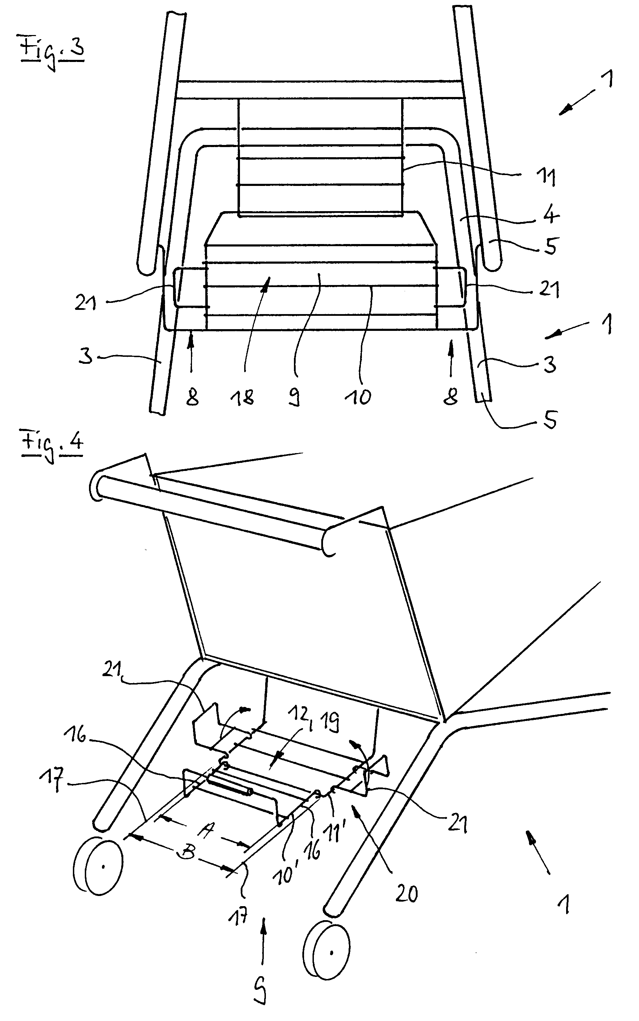

Der in Fig. 1 dargestellte Einkaufswagen 1 orientiert sich an einem Einkaufswagen 1, wie er beispielsweise in der EP 0141 398 A1 näher beschrieben ist. Diese Zuordnung soll nicht bedeuten, daß die erfindungsgemäße Lösung nur an dieser Art von Einkaufswagen 1 anwendbar ist. Vielmehr umfaßt die Erfindung alle denkbaren und bekannten Einkaufswagen 1, deren zwischen den Längsholmen 3 des Fahrgestelles 2 befindliche Ablagen 9, oder ein Teil davon, nach rückwärts in eine Gebrauchslage und umgekehrt, also wieder zurück, bewegbar ist. In Gebrauchslage lassen sich auf den Ablagen 9 größere Gegenstände 22, insbesondere Getränkekisten abstellen. Alle diese Ablagen 9 weisen deshalb eine aus wenigstens einem Bauteil gebildete Abstellfläche 12 auf. Im Beispiel sind auf der Abstellfläche 12 der Ablage 9 zwei kleine Getränkekisten 22 abgestellt. Die Getränkekisten 22 stützen sich nach hinten an einer höher als die Abstellfläche 12 angeordneten Querverbindung 13 ab. Zu beiden Seiten der Ablage 9 sind Stützteile 21 vorgesehen, die entweder zum Vergrößern der Abstellfläche 12 der Ablage 9 oder zum Vergrößern der Abstellfläche 12 und zur seitlichen Begrenzung von größeren Gegenständen 22 oder ausschließlich zum seitlichen Begrenzen der Gegenstände 22 bestimmt sind. Der vereinfacht dargestellte Einkaufswagen 1 weist in bekannter Weise neben der Ablage 9 ein in Schieberichtung des Einkaufswagens 1 sich verjüngendes Fahrgestell 2 auf, das mit zwei Längsholmen 3 ausgestattet ist, die, wie bekannt, nach oben gekrümmt sind und mit ihrem oberen Abschnitt einen Korb 6 tragen, der gewöhnlich mit einer Schiebeeinrichtung 7 ausgestattet ist. Alle von der Erfindung erfaßten Einkaufswagen 1 sind in ebenfalls bekannter Weise so gestaltet, daß sie sich platzsparend ineinanderschieben, also stapeln lassen.

Die Ablage 9 des in Fig. 2 dargestellten Einkaufswagens 1 besteht in bekannter Weise aus einem Schwenkteil 10 und aus einem Halteteil 11. Beide bilden die Abstellfläche 12. Am Schwenkteil 10 sind auf Höhe der Abstellfläche 12 zu beiden Längsseiten 14 je ein Stützteil 21 angeordnet. Jedes Stützteil 21 ist um eine in Schieberichtung des Einkaufswagens 1 gerichtete Achse 17 bewegbar am Schwenkteil 10 gelagert. In der in der Zeichnung gezeigten Gebrauchslage der Stützteile 21 stützen diese sich zusätzlich an der Unterseite 15 des Schwenkteiles 10 und damit an der Unterseite der Ablage 9 ab. Die Stützteile 21 sind so gelagert, daß sie sich, siehe die beiden Doppelpfeile, auf die Abstellfläche 12 der Ablage 9 schwenken oder klappen lassen. Ferner sind das Schwenkteil 10 und die Stützteile 21 bevorzugt so gestaltet und gelagert, daß bei einem Herausklappen der Ablage 9 aus der Nichtgebrauchs- in die Gebrauchslage, so wie dargestellt, die Stützteile 21 von selbst ihre Gebrauchslage einnehmen.
Fig. 3 zeigt ausschnittweise und in einer Draufsicht zwei Einkaufswagen 1 der in Fig. 1 und 2 beschriebenen Art während des Stapelvorganges. Die Ablage 9, bestehend aus dem Schwenkteil 10, dem Halteteil 11 und den beiden Stützteilen 21 befindet sich in Gebrauchslage. Aus der Zeichnung ist ersichtlich, daß die beiden Stützteile 21 des vorausbefindlichen Einkaufswagens 1 in jene Räume 8 ragen, die von den gekrümmten Längsholmen 3, vgl. Fig. 1 und 2, des Fahrgestelles 2 eines rückwärtigen einzuschiebenden Einkaufswagens 1 beansprucht werden. Wie ferner aus den Zeichnungen ersichtlich ist, sind die beiden Längsholme 3 des Fahrgestelles 2 in bekannter Weise nach oben gekrümmt. Sie weisen einen nach hinten ansteigenden und einen weiteren nach hinten wieder abfallenden Abschnitt 4, 5 auf. Beim Ineinanderschieben der Einkaufswagen 1 schieben die beiden ansteigenden Abschnitte 4 der Längsholme 3, und damit das Fahrgestell 2, des rückwärtigen Einkaufswagens 1 nicht nur die Ablage 9 des vorausbefindlichen Einkaufswagens 1 in die Nichtgebrauchslage, sondern sie heben auch die beiden Stützteile 21 der vorausbefindlichen Ablage 9 so an, daß sie auf die Abstellfläche 18 des Schwenkteiles 10 fallen und damit den Stapelvorgang nicht behindern. Die Stützteile 21 können aber auch so angeordnet und gelagert sein, daß sie von den Längsholmen 3 bzw. vom Fahrgestell 2 des rückwärtigen Einkaufswagens 1 in eine den Stapelvorgang nicht behindernde Lage bewegt werden, in der sie entweder verharren oder in dieser Lage von den Längsholmen 3 des rückwärtigen Einkaufswagens 1 gehalten werden. In diesem Falle befinden sich die Stützteile 21 nach oben geschwenkt zwischen der Ablage 9 und den Längsholmen 3 des eingeschobenen Einkaufswagens 1.

Fig. 4 zeigt im Detail eine Ablage 9 für einen Einkaufswagen 1 von beispielsweise jener Art, wie er in der EP 0 620 146 A1 beschrieben ist. Die Ablage 9 dieses Einkaufswagens 1 besteht aus einem ortsfesten Halteteil 11' und aus einem beweglichen, am Halteteil 11' gelagerten Schwenkteil 10' das nach rückwärts in eine Gebrauchslage verschwenkbar ist. Bei diesem Ausführungsbeispiel sind die auf den parallel zur Schieberichtung des Einkaufswagens 1 sich erstreckenden Achsen 17 gelagerten Stützteile 21, nicht wie vorher gezeigt an einem beweglichen Teil der Ablage 9, sondern an einem ortsfesten Teil, dem Halteteil 11' nach oben verschwenkbar angeordnet. Beide Stützteile 21 stützen sich in Gebrauchslage an der Unterseite 20 des Halteteiles 11', und damit an der Unterseite der Ablage 9, ab. Die Stützteile 21 lassen sich aus einer Gebrauchslage, in der sie einen Teil der Abstellfläche 12 der Ablage 9 bilden, nach oben oder auf die Abstellfläche 19 des ortsfesten Halteteiles 11' schwenken, so daß sie eine Lage einnehmen, in der sie den Stapelvorgang mit einem weiteren Einkaufswagen 1 nicht behindern. In ähnlicher Weise lassen sich die Stützteile 21 auch an den beiden Schenkeln 16 des Schwenkteiles 10' verschwenkbar anbringen. In diesem Falle ist es von Vorteil, das Schwenkteil 10' bzw. den Abstand A der beiden Schenkel 16 größer zu gestalten als die Breite B des Halteteiles 11'.

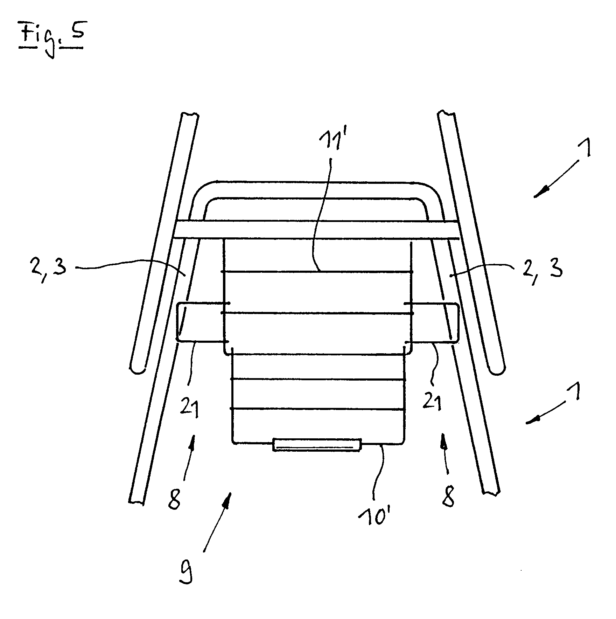

In einer Draufsicht zeigt Fig. 5 die Ablage 9 mit den ausgeklappten Stützteilen 21 in Gebrauchslage. Wie bereits in der Beschreibung zu Fig. 3 erwähnt, ragen auch bei diesem Ausführungsbeispiel die Stützteile 21 in jene Räume 8, die beim Ineinanderschieben zweier Einkaufswagen 1 von den nach oben gebogenen Längsholmen 3 des Fahrgestelles 2 eines rückwärtigen Einkaufswagens 1 beim Ineinanderschiebevorgang beansprucht werden. Anhand der Zeichnung ist auch hier ersichtlich, daß beim Stapelvorgang zweier Einkaufswagen 1 die Stützteile 21 der Ablage 9 des vorausbefindlichen Einkaufswagens 1 durch das Fahrgestell 2 des einzuschiebenden Einkaufswagens 1 aus ihrer Nichtgebrauchslage in eine den Stapelvorgang nicht behindernde Lage bewegbar sind.

Da alle bekannten Ablagen 9 gewöhnlich aus wenigstens zwei Teilen bestehen, die eine gemeinsame Abstellfläche 12 für das Abstellen größerer Gegenstände 22 aufweisen, verdeutlicht die hier vorgeschlagene Erfindung ganz allgemein, daß es möglich ist, die Stützteile 21 entweder an einem starren ortsfesten Teil oder an einem beweglichen Teil der Ablage 9 so anzubringen, daß beim Stapelvorgang zweier Einkaufswagen 1 die Stützteile 21 der Ablage 9 eines vorausbefindlichen Einkaufswagens 1 vom einzuschiebenden Einkaufswagen 1 aus ihrer Gebrauchslage in eine den Stapelvorgang nicht behindernde Lage bewegbar sind.

## Patentansprüche

1. Stapelbarer Einkaufswagen (1), mit einem Fahrgestell (2), dessen nach oben gekrümmte Längsholme (3) einen Korb (6) tragen, und mit einer zwischen den Längsholmen (3) und unterhalb des Korbes (6) befindlichen, zum Abstellen von größeren Gegenständen bestimmten Ablage (9), die aus einer Nichtgebrauchslage nach rückwärts in eine Gebrauchslage und umgekehrt bewegbar ist, dadurch **gekennzeichnet,** daß an beiden Seiten der Ablage (9) bewegbar gelagerte Stützteile (21) vorgesehen sind, die in ihrer Gebrauchslage zum weiteren Stützen der größeren Gegenstände (22) bestimmt und so angeordnet sind, daß beim Stapelvorgang zweier Einkaufswagen (1) die Stützteile (21) der Ablage (9) des vorausbefindlichen Einkaufswagens (1) vom rückwärtigen einzuschiebenden Einkaufswagen (1) aus der Gebrauchslage in eine den Stapelvorgang nicht behindernde Lage bewegbar sind.

2. Stapelbarer Einkaufswagen nach Anspruch 1, dadurch **gekennzeichnet,** daß die Stützteile (21) entweder an einem ortsfesten (11') oder an einem beweglichen Teil (10, 10') der Ablage (9) angeordnet sind.

3. Stapelbarer Einkaufswagen nach Anspruch 1 oder 2, dadurch **gekennzeichnet,** daß die Stützteile (21) zum Vergrößern der Abstellfläche (12) der Ablage (9) und/oder zum seitlichen Begrenzen der Gegenstände (22) bestimmt sind.

4. Stapelbarer Einkaufswagen nach einem der Ansprüche 1 bis 3, dadurch **gekennzeichnet,** daß die Stützteile (21) um je eine in Schieberichtung des Einkaufswagens (1) gerichtete Achse (17) bewegbar gelagert sind.

5. Stapelbarer Einkaufswagen nach einem der Ansprüche 1 bis 4, dadurch **gekennzeichnet,** daß die Stützteile (21) in Gebrauchslage zusätzlich an der Unterseite der Ablage (9) abgestützt sind.

6. Stapelbarer Einkaufswagen nach einem der Ansprüche 1 bis 5, dadurch **gekennzeichnet,** daß sich die Stützteile (21) auf die Abstellfläche (12) der Ablage (9) bewegen lassen.

## Claims

1. A stackable shopping trolley (1), having a wheel frame (2) whose upwardly-curved longitudinal members (3) bear a basket (6), and having a rack (9) which is located between the longitudinal members (3) and below the basket (6), is for the depositing of relatively large objects and is movable rearwards from an out-of-use position into an in-use position and vice-versa, characterised in that movably mounted supporting parts (21) are provided at either side of the rack (9), are to further support the relatively large objects (22) in their in-use position and are arranged in such a manner that, when stacking two shopping trolleys (1), the supporting parts (21) of the rack (9) of the shopping trolley (1) located in front are movable, by the rear shopping trolley (1) to be pushed in, from the in-use position into a position in which they do not hinder stacking.

2. A stackable shopping trolley in accordance with Claim 1, characterised in that the supporting parts (21) are arranged either on a fixed part (11') or on a movable part (10, 10') of the rack (9).

3. A stackable shopping trolley in accordance with Claim 1 or 2, characterised in that the supporting parts (21) are for enlarging the deposit surface (12) of the rack (9) and/or for laterally bounding the objects (22).

4. A stackable shopping trolley in accordance with any one of Claims 1 to 3, characterised in that the supporting parts (21) are mounted so as to be movable about a respective axis (17) directed in the advancing direction of the shopping trolley (1).

5. A stackable shopping trolley in accordance with any one of Claims 1 to 4, characterised in that in the in-use position, the supporting parts (21) are also supported on the underside of the rack (9).

6. A stackable shopping trolley in accordance with any one of Claims 1 to 5, characterised in that the supporting parts (21) can be moved onto the deposit surface (12) of the rack (9).

## Revendications

1. Chariot à achats (1) emboîtable (en d'autres chariots semblables), comprenant un châssis roulant (2) dont les longerons (3), courbés vers le haut, portent un panier (6), et comprenant un support (9), se trouvant entre les longerons (3) et sous le panier (6), sur lequel on peut poser des objets relativement grands, support qui peut être déplacé vers l'arrière à partir d'une position de non-utilisation à une position d'utilisation et inversement, **caractérisé** en ce que des parties de soutien ou appuis (21) sont montés mobiles sur les deux côtés du support (9), lesquels sont destinés à davantage soutenir les objets relativement grands (22) dans leur position d'utilisation et sont agencés de manière que lors de l'emboîtement de deux chariots (1), les appuis (21) du support (9) du chariot (1) se trouvant à l'avant, puissent être déplacés, par le chariot (1) à pousser dans l'arrière du chariot avant, de la position d'utilisation à une position où ils n'entravent pas l'emboîtement.

2. Chariot à achats emboîtable selon la revendication 1, caractérisé en ce que les appuis (21) sont disposés sur une partie fixe (11') ou sur une partie mobile (10, 10') du support (9).

3. Chariot à achats emboîtable selon la revendication 1 ou 2, caractérisé en ce que les appuis (21) sont destinés à agrandir la surface de pose d'objets (12) du support (9) et/ou à délimiter latéralement les objets (22).

4. Chariot à achats emboîtable selon une des revendications 1 à 3, caractérisé en ce que les appuis (21) sont chacun montés mobiles autour d'un axe (17) orienté dans la direction suivant laquelle est poussé le chariot (1).

5. Chariot à achats emboîtable selon une des revendications 1 à 4, caractérisé en ce que les appuis (21) en position d'utilisation sont appuyés en plus sur le côté inférieur du support (9).

6. Chariot à achats emboîtable selon une des revendications 1 à 5, caractérisé en ce que les appuis (21) sont déplaçables jusque sur la surface de pose d'objets (12) du support (9).
